(19) Europäisches Patentamt
European Patent Office
Office européen des brevets

(11) **EP 1 720 307 B1**

(12) **FASCICULE DE BREVET EUROPEEN**

(45) Date de publication et mention
de la délivrance du brevet:
**01.10.2008 Bulletin 2008/40**

(51) Int Cl.:
***H04L 27/233*** (2006.01)

(21) Numéro de dépôt: **06290695.3**

(22) Date de dépôt: **02.05.2006**

(54) **Dispositif de réception adapté à un système de transmission utilisant un étalement de spectre à séquence directe**

Empfänger für Direktsequenzspreizspektrumsübertragungssystem

Receiver for transmission system using direct sequence spread spectrum

(84) Etats contractants désignés:
**DE FR GB IT**

(30) Priorité: **04.05.2005 FR 0504589**

(43) Date de publication de la demande:
**08.11.2006 Bulletin 2006/45**

(73) Titulaires:
• **STMicroelectronics (Rousset) SAS**
**13790 Rousset (FR)**
• **Université de Provence**
**13331 Marseille Cédex 3 (FR)**

(72) Inventeurs:
• **Durand, Benoît**
**13790 Rousset (FR)**
• **Fraschini, Christophe**
**83130 La Garde (FR)**
• **Courmontagne, Phiilppe**
**83210 Belgentier (FR)**

(74) Mandataire: **Bentz, Jean-Paul et al**
**Novagraaf Technologies**
**122 Rue Edouard Vaillant**
**92593 Levallois-Perret Cedex (FR)**

(56) Documents cités:
**US-A- 5 241 561**    **US-A- 5 303 258**
**US-A- 6 134 264**    **US-B1- 6 393 077**

• **CANALES T J ET AL: "ADAPTIVE STOCHASTIC FILTERS" PROCEEDINGS OF THE MIDWEST SYMPOSIUM ON CIRCUITS AND SYSTEMS. CHAMPAIGN, AUG. 14 - 16, 1989, NEW YORK, IEEE, US, vol. VOL. 1 SYMP. 32, 14 août 1989 (1989-08-14), pages 609-612, XP000139728**
• **J.F. CAVASSILAS, B.XERRI: "Extension de la notion de filtre adapté. Contribution à la détection de signaux courts en présence de termes perturbateurs" REVUE TRAITEMENT DU SIGNAL, vol. 10, no. 3, 1992, pages 215-221, XP002363859**
• **LAKKIS I ET AL: "Optimum eigenfilters and matched filters" ELECTRONICS LETTERS, IEE STEVENAGE, GB, vol. 32, no. 22, 24 octobre 1996 (1996-10-24), pages 2068-2070, XP006005913 ISSN: 0013-5194**
• **RASMUSSEN J L ET AL: "An adaptive technique for designing minimum phase models" SIGNALS, SYSTEMS AND COMPUTERS, 1991. 1991 CONFERENCE RECORD OF THE TWENTY-FIFTH ASILOMAR CONFERENCE ON PACIFIC GROVE, CA, USA 4-6 NOV. 1991, LOS ALAMITOS, CA, USA,IEEE COMPUT. SOC, US, 4 novembre 1991 (1991-11-04), pages 654-658, XP010026383 ISBN: 0-8186-2470-1**
• **JEAN-FRANÇOIS CAVASSILAS: "Le filtrage adapté stochastique" INTERNET ARTICLE, [Online] XP002363860 Extrait de l'Internet: URL: http://cava.univ-tln.fr/Adapte.pdf> [extrait le 2006-01-20]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne, de manière générale, le traitement des signaux numériques et, notamment, les techniques de décodage de tels signaux dans des applications de communication numérique radio-fréquence.

L'invention concerne plus précisément un dispositif de réception, notamment adapté à un système de transmission utilisant une modulation binaire en phase de la porteuse (BPSK, pour « Binary Phase Shift Keying ») par un message binaire sur lequel a été pratiqué un étalement de spectre à séquence directe (DSSS, pour « direct Spread Spectrum Sequence »).

Les documents US 5,241,561 (U.S. Philips Corporation) 31.08.1993 et US 6,134,264 (Hitachi Ltd.) 17.10.2000 divulguent un récepteur à étalement de spectre à séquence directe.

Dans un système de transmission d'un signal numérique utilisant un étalement de spectre à séquence directe, les bits "0" et "1" sont codés par des symboles respectifs envoyés par l'émetteur et décodés, au niveau du récepteur, par un filtre à réponse impulsionnelle finie.

Dans le cas où les bits sont codés en utilisant un code d'étalement de longueur N, les symboles codant les bits "0" et "1" se présentent chacun sous la forme d'une série de N éléments de symbole (« 0 » ou « 1 »), dénommés « chips », distribués sur l'un ou l'autre de deux niveaux différents et délivrés à une fréquence fixe prédéterminée F.

Les éléments de symbole codant le bit "1" sont anti-corrélés aux éléments de symbole correspondants codant le bit "0", c'est-à-dire que les éléments de symbole de même rang dans l'un et l'autre de ces deux symboles ont des valeurs opposées.

Par exemple, dans la mesure où un élément de symbole du symbole codant le bit "1" est au niveau 1, l'élément de symbole correspondant du symbole codant le bit "0" est au niveau -1. De même, dans la mesure où un élément de symbole du symbole codant le bit "1" est au niveau -1, l'élément de symbole correspondant du symbole codant le bit "0" est au niveau 1.

Le message binaire étalé est alors utilisé pour moduler en phase la porteuse, se présentant sous la forme d'une onde sinusoïdale fonction du temps notée p(t), p(t)=cos(2πfp.t+φ), où fp est sa fréquence et φ sa phase à l'origine.

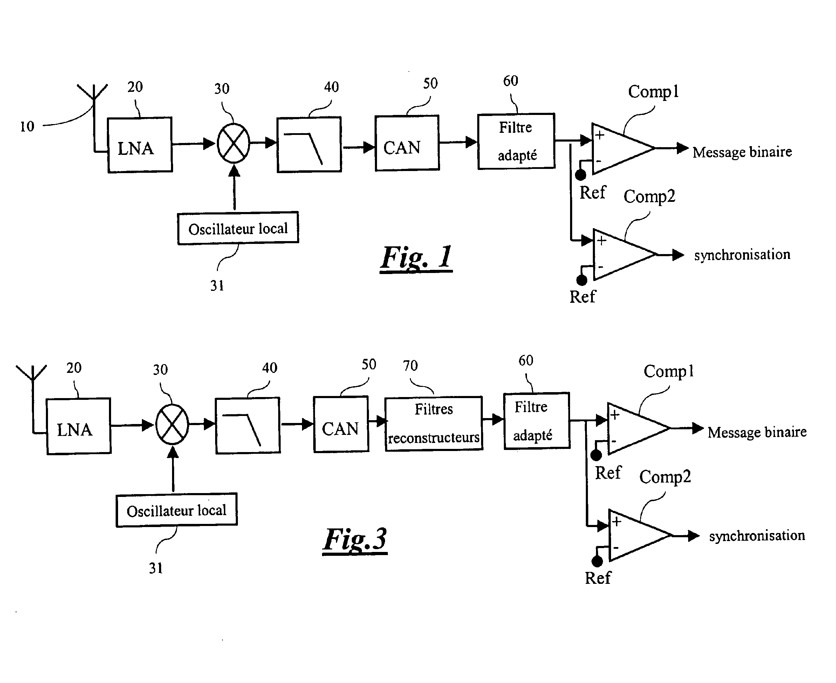

La figure 1 illustre l'architecture d'une chaîne de réception BPSK synchrone. Cette architecture conduit classiquement à interfacer des modules radio analogiques avec un système de traitement numérique travaillant à une fréquence proche de zéro. Le traitement de l'information est alors effectué à cette fréquence, ce qui permet avantageusement d'utiliser des convertisseurs analogique-numérique travaillant à des fréquences réduites. Ainsi, lorsque le signal numérique atteint le récepteur, il est capté par une antenne 10, puis transmis au bloc analogique de la chaîne, comprenant l'amplificateur à faible bruit 20 (LNA), l'oscillateur local 31 ainsi que le mélangeur 30. Ces éléments ne voyant pas leur fonctionnement modifié dans le cadre de la présente invention, ils ne seront pas décrits plus en détail.

On notera simplement que le mélangeur 30, recevant sur sa première entrée le signal en sortie de l'amplificateur LNA, reçoit sur sa deuxième entrée, connectée à l'oscillateur local 31, une fréquence correspondant à la fréquence porteuse du signal. Ceci a pour effet de ramener le signal en bande de base. On dispose donc en sortie du mélangeur, du message binaire sous forme continue en bande de base, ajouté à une composante haute fréquence centrée sur deux fois la fréquence porteuse. En effet, cette opération de démodulation fait apparaître le motif spectral du signal en bande de base, mais aussi à deux fois la fréquence de démodulation, c'est-à-dire autour de la fréquence 2fp.

Aussi, un étage 40 de filtrage passe-bas en sortie du mélangeur 30 permet de supprimer la distorsion harmonique due à la redondance du spectre lors de la démodulation du signal. Le filtre passe-bas 40 possède pour ce faire une fréquence de coupure égale à la fréquence maximum du message étalé en bande de base, ce qui fait qu'on retrouve à sa sortie uniquement le message en bande de base, c'est-à-dire ramené autour de la fréquence 0.

Le signal résultant est ensuite numérisé par le convertisseur analogique/numérique (CAN) 50. Il est échantillonné à une fréquence d'échantillonnage respectant la limite de Shannon. En d'autres termes, la fréquence d'échantillonnage est prise égale à au moins deux fois la fréquence maximum présentée par la densité spectrale de puissance du message étalé en bande de base.

En sortie du CAN, le décodeur DSSS est constitué par un étage 60 de filtre adapté, permettant de réaliser la récupération de la synchronisation du signal à décoder par rapport à l'information utile. Plus précisément, il s'agit d'un filtre numérique à réponse impulsionnelle finie, caractérisé par les coefficients $\{a_i\}_{i=0,1,\ldots,n}$ de sa réponse impulsionnelle. Le processus de décodage basé sur le filtre adapté consiste à faire correspondre la suite de coefficients $a_i$ à la réplique exacte du code d'étalement choisi. Par exemple, si le code Barker 7 (-1 -1 -1 1 1 -1 1) a été utilisé, les coefficients du filtre adapté sont -1 -1 -1 1 1 -1 1.

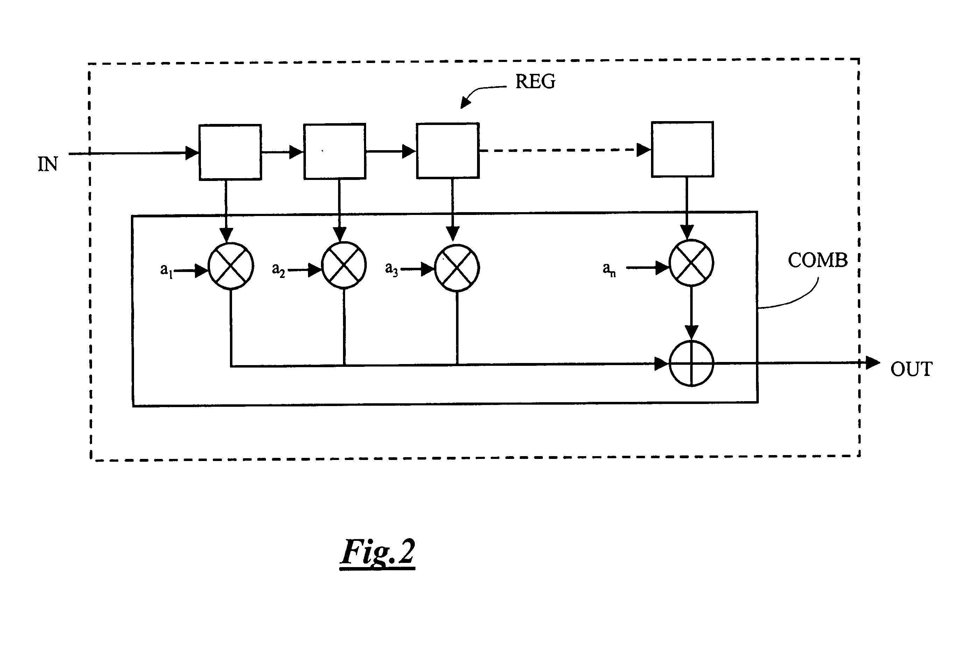

Sa structure, décrite à la figure 2, est celle d'un registre à décalage REG recevant chaque échantillon du signal d'entrée IN. Le filtre doit être cadencé à la même fréquence d'échantillonnage que celle du signal entrant. Le registre à décalage comprend N bascules dans le cas de symboles à N éléments de symbole, qui coopèrent avec un circuit combinatoire COMB, conçu de façon connue de l'homme du métier et faisant intervenir la suite de coefficients $a_i$ de manière que le signal de sortie OUT produit par le filtre présente une amplitude dépendant directement du niveau de corrélation constaté entre la séquence des N derniers échantillons capturés par ce filtre et la série des N éléments de symbole de l'un des deux symboles, par exemple la série des N éléments du symbole codant un bit "1" du signal numérique.

Le filtrage adapté consiste donc à faire correspondre la suite de coefficients $a_i$ à la réplique exacte du code d'étalement choisi, pour corréler les niveaux des éléments de symbole qu'il reçoit successivement sur son entrée, aux niveaux que présentent les éléments de symbole successifs de l'un des deux symboles codant les bits « 0 » et « 1 », par exemple les éléments de symbole du symbole codant le bit "1".

La sortie du filtre à réponse finie 60 fournit typiquement des pics de synchronisation, dont le signe donne la valeur du bit du message d'origine à cet instant : si le pic est négatif, il s'agit d'un « 0 », et d'un « 1 » si le pic est positif. Pour transformer les symboles ainsi décodés en un flux de données binaires correspondant au message d'origine et pour leur associer une horloge de synchronisation, ces pics sont passés dans des comparateurs à hystérésis, respectivement Comp1 et Comp2. Le message d'origine ainsi que l'horloge de synchronisation sont donc restitués en sortie des comparateurs à hystérésis.

Plus précisément, le premier comparateur Comp1 bascule dès que le signal passe au-dessous d'une valeur de seuil inférieur ou au-dessus d'une valeur de seuil supérieur et fournit alors un signal numérique sur un bit correspondant à la donnée. Le deuxième comparateur bascule dès que le signal passe au-dessus ou au-dessous de la valeur de seuil inférieur et dès que le signal passe au-dessus ou au-dessous de la valeur de seuil inférieur et fournit alors un signal numérique sur un bit qui sert d'horloge de capture pour les données. Les valeurs de seuils inférieur et supérieur sont réglables.

Toutefois, lorsque le canal de transmission est bruité, on observe une dégradation significative des performances du processus de décodage DSSS basé sur le filtre adapté et, tout particulièrement, lorsque le signal utile et le bruit du canal de transmission ne sont pas totalement décorrélés. Dans ce contexte, des erreurs vont se produire, tant sur le message binaire restitué que sur l'horloge de synchronisation. On observe donc clairement une détérioration des performances du filtre adapté et, en conséquence, une augmentation importante du taux d'erreur bit en sortie du processus de décodage, avec la diminution du rapport signal à bruit.

Pour tenter d'améliorer les performances du dispositif de réception tel qu'il vient d'être décrit lorsqu'on est en présence d'un canal de transmission bruité, différentes solutions pourraient être envisagées. Notamment, on peut prévoir d'augmenter la puissance du signal à l'émission, ce qui implique cependant une augmentation conséquente de la puissance électrique consommée par le circuit. On pourrait encore envisager d'avoir recours à des codes d'étalement de spectre plus important mais ceci se ferait au détriment du débit qui se verrait de fait fortement réduit. Aussi, aucune de ces solutions ne donnent satisfaction.

Dans ce contexte, l'invention a pour but de remédier aux inconvénients cités en proposant un dispositif de réception BPSK amélioré, capable de décoder correctement un signal numérique, y compris en présence de bruit perturbateur. Autrement dit, l'invention vise à diminuer le taux d'erreur bit en sortie du processus de décodage pour un même rapport signal à bruit en entrée du dispositif de réception.

Avec cet objectif en vue, l'invention concerne un dispositif de réception d'un signal modulé, adapté à un système de transmission utilisant une modulation binaire en phase de la porteuse par un message binaire sur lequel a été pratiqué un étalement de spectre à séquence directe, ce dispositif comprenant une première partie analogique radio-fréquence, transformant le signal reçu en un signal démodulé basse-fréquence, ledit signal démodulé étant appliqué à une deuxième partie numérique dudit dispositif comprenant un convertisseur analogique-numérique et un filtre adapté au code d'étalement utilisé pour supprimer l'étalement appliqué au message d'origine, ledit dispositif étant caractérisé en ce qu'il comprend un bloc de filtrage supplémentaire, disposé entre le convertisseur analogique-numérique et le filtre adapté, ledit bloc de filtrage mettant en oeuvre un filtrage adapté stochastique pour améliorer le rapport signal à bruit en entrée dudit filtre adapté.

Avantageusement, le bloc de filtrage supplémentaire comprend une pluralité Q de filtres numériques de base à réponse impulsionnelle finie montés en parallèle, dont chacun reçoit le signal (Sin) échantillonné fourni en sortie du convertisseur analogique-numérique, chaque filtre étant caractérisé par un ensemble de K coefficients, ce nombre K étant déterminé de manière à ce qu'il corresponde au nombre d'échantillons minimal pour décrire un bit du message étalé, les coefficients de chacun des Q filtres correspondant respectivement aux composantes des Q vecteurs propres associés à au moins les Q valeurs propres supérieures à 1 de la matrice $B^{-1}A$, où B est la matrice de variance-covariance du bruit résultant après démodulation et A la matrice de variance-covariance du signal utile.

De préférence, le bloc de filtrage supplémentaire comprend, pour chaque filtre de la pluralité Q de filtres à réponse impulsionnelle finie, des moyens pour multiplier le signal obtenu en sortie dudit filtre, avec respectivement le vecteur résultant du produit entre la matrice B de variance-covariance du bruit et le vecteur propre définissant les coefficients dudit filtre, ledit bloc comprenant en outre des moyens de sommation des vecteurs résultant de toutes ces opérations, fournissant un signal correspondant au signal en sortie du convertisseur analogique-numérique remis en forme et présentant un rapport signal à bruit amélioré.

Avantageusement, le dispositif comprend un premier et un second comparateurs à hystérésis installés en sortie du filtre adapté au code d'étalement, propre à comparer l'amplitude du signal de sortie du filtre adapté à une valeur de seuil inférieur et à une valeur de seuil supérieur, et à délivrer respectivement le message binaire d'origine et son horloge de synchronisation associée pour la capture des données dudit message.

De préférence, le premier et le second comparateur présentent des valeurs de seuils supérieur et inférieur réglables.

Selon un mode de réalisation, le filtre adapté au code d'étalement utilisé est un filtre numérique à réponse finie.

Selon le mode de réalisation, le bruit correspond au bruit du canal de transmission.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 illustre schématiquement une chaîne de réception BPSK synchrone classique et a déjà été décrite ;
- la figure 2 illustre schématiquement la structure d'un filtre à réponse finie adapté au code d'étalement utilisé, mis en oeuvre dans le dispositif de la figure 1, et a déjà été décrite ;
- la figure 3 illustre schématiquement une chaîne de réception BPSK synchrone modifiée selon la présente invention ;
- la figure 4 illustre un mode de réalisation du bloc de filtrage supplémentaire proposé par la présente invention en sortie du CAN et en amont du filtre adapté.

L'invention concerne donc un dispositif de réception, notamment adapté à un système de transmission utilisant une modulation binaire en phase de la porteuse par un message binaire sur lequel a été pratiqué un étalement de spectre à séquence directe. Comme il a déjà été décrit, ce dispositif comprend une première partie analogique radio-fréquence, transformant le signal reçu par l'antenne en un signal démodulé basse-fréquence, et une deuxième partie numérique avec des moyens 50 de conversions analogique numérique du signal et des moyens 60 de décodage permettant de supprimer l'étalement appliqué au message d'origine.

Ce dispositif est donc conçu pour recevoir et décoder un signal numérique d'entrée composé de bits dont chacun, en fonction de sa valeur "1" ou "0", est représenté par l'un ou l'autre de deux symboles où chaque symbole est constitué d'une série de N éléments de symbole, distribués sur l'un ou l'autre de deux niveaux différents. Ces symboles peuvent par exemple répondre à un code de Barker.

Ces éléments de symbole sont délivrés à une fréquence fixe prédéterminée F correspondant à une période déterminée $T = 1/F$, et les N éléments de symboles du symbole codant le bit "1" sont anti-corrélés aux N éléments de symboles correspondants du symbole codant le bit "0".

Pour permettre d'améliorer les performances du processus de décodage basé sur le filtre adapté et donc pour augmenter la robustesse de la chaîne de réception face au bruit, l'invention se propose d'adjoindre à la structure de la chaîne déjà décrite, un bloc de filtrage supplémentaire, prévu pour maximiser le rapport signal à bruit avant le passage du signal dans le filtre adapté, ce dernier restant indispensable pour la récupération de la synchronisation.

Ainsi, comme l'indique la figure 3, le dispositif de réception BPSK selon l'invention comprend essentiellement, en plus des éléments déjà décrits, un tel bloc de filtrage supplémentaire 70, prévu pour se positionner entre le CAN 50 et le filtre adapté 60. Ce bloc de filtrage supplémentaire est constitué d'une pluralité de filtres dénommés filtres reconstructeurs, en ce qu'ils sont adaptés au signal tout en étant désadaptés au bruit.

L'ajout de ce bloc 70 de filtrage supplémentaire, disposé en sortie du CAN 50 et en amont du filtre adapté 60, a donc pour rôle de contrer l'augmentation de la puissance du bruit du canal de transmission. La finalité de l'utilisation de ce filtre est une amélioration du rapport signal à bruit avant le passage du signal dans le filtre adapté 60. Pour ce faire, comme il va être expliqué ci-après en détail, le bloc de filtres reconstructeurs 70 est basé sur une technique de filtrage connue sous l'appellation de filtrage adapté stochastique.

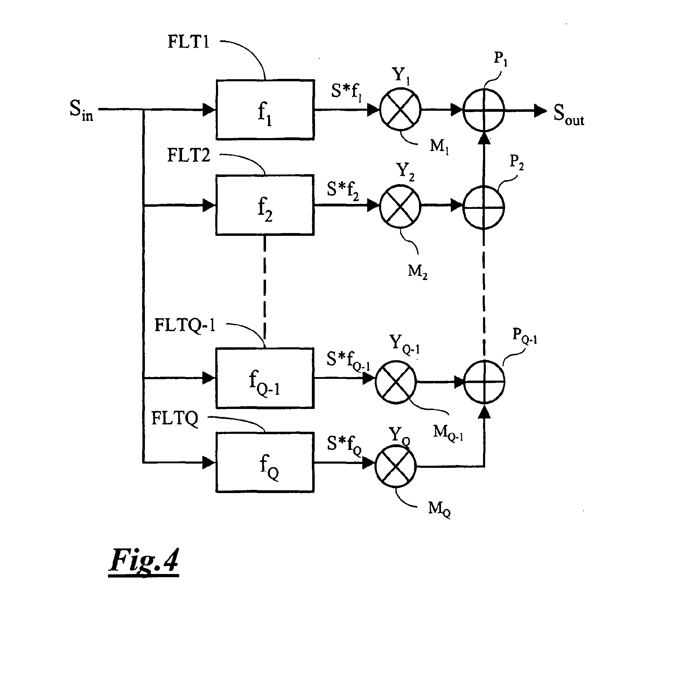

Selon cette technique de filtrage, les filtres reconstructeurs sont constitués d'un banc de Q filtres numériques FLT1 à FLTQ, comme illustrés en figure 4, montés en parallèle et prévus pour s'adapter au signal tout en se désadaptant au bruit.

Concernant le principe d'un filtre adapté stochastique, si on considère $s(t)$ et $b(t)$ deux signaux aléatoires centrés, c'est-à-dire d'espérance mathématique nulle, et si on suppose que $s(t)$ est le signal jugé d'intérêt, et $b(t)$ le signal perturbateur avec un rapport signal à bruit défini comme étant le rapport de la puissance de $s(t)$ par la puissance de $b(t)$, le filtrage adapté stochastique consiste en un ensemble de plusieurs filtres, où chaque filtre, lorsqu'il est appliqué au mélange additif $s(t)+b(t)$, améliore le rapport signal à bruit du mélange.

Le nombre Q de filtres FLT1 à FLTQ devant être mis en oeuvre dans le bloc 70 dépend étroitement de la nature du bruit du canal de transmission. Comme on le verra plus loin, le choix du nombre Q s'effectue en fait de façon à obtenir le meilleur compromis entre le gain en rapport signal à bruit et la précision sur la synchronisation.

L'ordre de chacun des filtres est donné par le paramètre K, désignant le nombre d'échantillons minimal pour décrire un temps bit, soit le nombre d'échantillons pris sur une période correspondant au code d'étalement. De manière générale, si d est débit binaire et $f_e$ la fréquence d'échantillonnage :

$$K = \frac{f_e}{d}$$

Dans la pratique, les filtres FLT1 à FLTQ d'ordre K sont des filtres à réponse impulsionnelle finie et leur structure est similaire à celle déjà décrite en référence à la figure 3. Chacun de ces filtres, à savoir les filtres FLT1 à FLTQ, reçoit parallèlement aux autres le signal $S_{in}$ à décoder tel qu'il est fourni en sortie du CAN 50.

Il convient alors de configurer judicieusement le bloc de filtrage 70 en choisissant tout d'abord les coefficients respectifs de chacun des filtres à réponse finie FLT1 à FLTQ, d'une manière qui permette d'améliorer le rapport signal à bruit en amont du filtre adapté 60 dans la chaîne de réception. Pour ce faire, selon les principes du filtrage adapté stochastique, les coefficients de ces filtres vont être déterminés en se basant sur une exploitation des paramètres statistiques représentatifs du signal, d'une part et du bruit, d'autre part.

Dans la pratique, les coefficients de chaque filtre correspondent en effet respectivement aux composantes de certains vecteurs propres, notés $f_1$ à $f_Q$, de la matrice $B^{-1}A$, où B est la matrice de variance-covariance du bruit résultant après démodulation et A la matrice de variance-covariance du signal utile correspondant au message étalé, les dimensions des matrices A et B étant égales à K. On note $S^*f_1$ à $S^*f_Q$ les signaux résultant des filtrages par les filtres FLT1 à FLTQ.

Le signal reçu peut en effet être représenté par un vecteur aléatoire dont les composantes correspondent concrètement aux échantillons du signal échantillonné.

Soit X est un tel vecteur aléatoire à réalisations dénombrables notées $X^k$. On adopte les notations suivantes :

$$X = \begin{pmatrix} x_1 \\ x_2 \\ \circ \\ \circ \\ \circ \\ x_n \end{pmatrix} \qquad X^k = \begin{pmatrix} x_1^k \\ x_2^k \\ \circ \\ \circ \\ \circ \\ x_n^k \end{pmatrix}$$

De ce point de vue, la composante $x_i$ est un nombre aléatoire et la composante $x_i^k$ est une réalisation de $x_i$ avec la probabilité pk. Les coefficients $x_i$ correspondent ainsi aux échantillons du signal échantillonné.

On définit l'espérance mathématique de $x_i$, que l'on note $E\{x_i\}$, de la façon suivante :

$$E\{x_i\} = \sum_{k=0}^{\infty} p_k x_i^k$$

Cette définition permet alors d'introduire l'espérance mathématique d'un tel vecteur aléatoire :

$$E\{X\} = \begin{pmatrix} E\{x_1\} \\ E\{x_2\} \\ \circ \\ \circ \\ E\{x_n\} \end{pmatrix}$$

Par définition, on rappelle que la matrice de variance-covariance du vecteur aléatoire X, notée G, est définie par .

$G = E\{XX^T\}$ ; avec $XX^T$ définissant le produit tensoriel du vecteur X par le vecteur X, ce qui se note

$$G = \begin{pmatrix} E\{x_1 x_1\} & E\{x_1 x_2\} & E\{x_1 x_3\} & \circ \circ \circ & E\{x_1 x_n\} \\ E\{x_2 x_1\} & E\{x_2 x_2\} & E\{x_2 x_3\} & \circ \circ \circ & E\{x_2 x_n\} \\ E\{x_3 x_1\} & E\{x_3 x_2\} & E\{x_1 x_3\} & \circ \circ \circ & E\{x_3 x_n\} \\ \circ & \circ & \circ & & \circ \\ \circ & \circ & \circ & & \circ \\ E\{x_n x_1\} & E\{x_n x_2\} & E\{x_n x_3\} & \circ \circ \circ & E\{x_n x_n\} \end{pmatrix}$$

Lorsque les coefficients $x_i$ correspondent, comme c'est le cas ici, aux échantillons d'un signal aléatoire stationnaire, c'est-à-dire que $E\{x_i x_j\}$ ne dépend que de (j-i), alors il est possible de construire la matrice de variance covariance seulement à partir du jeu de coefficients $E\{x_1 x_1\}$, $E\{x_1 x_2\}$, $E\{x_1 x_3\}$, ..., $E\{x_1 x_n\}$. Ces coefficients correspondent, dans ce cas aux valeurs prises par la fonction d'autocorrélation du signal observé.

Dans la pratique, le calcul des coefficients des matrices A, et respectivement B, peut se faire à partir des valeurs prises par la fonction d'autocorrélation du signal utile, respectivement du bruit.

En effet, le fait d'étaler le message d'origine à transmettre va lui procurer certaines propriétés statistiques. Notamment, on se rend compte que sa fonction d'autocorrélation correspond à la fonction d'autocorrélation déterministe du code d'étalement utilisé. Avantageusement, la fonction d'autocorrélation correspondant au signal utile sera toujours identique pour un code d'étalement donné, indépendamment du message à transmettre. Ainsi, lorsqu'on étale le message à transmettre toujours avec le même code, la fonction d'autocorrélation associé au signal reste figée, la statistique du signal étant en fait davantage lié au code d'étalement utilisé qu'au signal lui-même.

Par ailleurs, on suppose également que le bruit est stationnaire, c'est-à-dire que ses caractéristiques statistiques ne vont pas varier au cours du temps. En fait, le bruit peut être caractérisé en terme de fréquences, par la bande passante du filtre passe-bas 40, dont on connaît la fréquence de coupure. Ainsi, la fonction d'autocorrélation associée au bruit, qui est déterminée de façon connue à partir de la densité spectrale du bruit en sortie du filtre passe bas 40, reste invariante quel que soit la nature du bruit à l'entrée. On obtient donc un modèle invariant pour la fonction d'autocorrélation du bruit.

Pour rappel, la fonction d'aûtocorrélation, notée r(1), du signal discret $x_k$ est calculée selon la relation suivante :

$$\Gamma(l) = E\{x_k\, x_{k-l}\} = \sum_k pkxkxk-l$$

A partir des deux fonctions d'autocorrélation, respectivement pour le signal utile et pour le bruit, les matrices A et B de variance-covariance peuvent donc être calculées. Les dimensions de A et de B sont égales à K, correspondant au nombre d'échantillons contenus dans une période bit. On peut alors calculer les valeurs et vecteurs propres de la matrice $B^{-1}A$.

Plus particulièrement, selon un mode de réalisation préféré, les coefficients respectifs des filtres FLT1 à FLTQ correspondent aux composantes des Q vecteurs propres associés aux Q valeurs propres supérieures à 1 de la matrice $B^{-1}A$. Ces filtres comportent donc chacun K coefficients.

Mathématiquement, les coefficients des filtres sont les coefficients génériques des vecteurs propres $f_n$ définis par le problème aux valeurs propres suivant :

$Af_n = \lambda_n Bf_n$, où A représente la matrice de variance covariance du signal utile, et B celle du bruit après démodulation.

Seuls les vecteurs propres $f_n$ associés aux valeurs propres $\lambda_n$ supérieures à 1 sont retenus. Il s'ensuit donc que si Q valeurs propres sont supérieures à 1, le banc de filtres du bloc de filtrage adapté stochastique sera constitué de Q filtres.

En effet, tous les vecteurs propres de la matrice $B^{-1}A$ associés à des valeurs propres supérieures à 1 sont représentatifs du signal et tous les vecteurs propres de la matrice $B^{-1}A$ associés à des valeurs propres inférieures à 1 sont représentatifs du bruit. Autrement dit, seuls les vecteurs propres de la matrice $B^{-1}A$ associés à des valeurs propres supérieures à 1 améliorent le rapport signal à bruit.

A chaque instant, le signal $S_{in}$ à la sortie du CAN est donc filtré par les Q filtres FLT1 à FLTQ disposés en parallèle, dont les coefficients correspondent aux composantes des vecteurs propres $f_1$ à $f_Q$ de dimension K, associés respectivement aux Q valeurs propres supérieures à 1 de la matrice $B^{-1}A$. Les coefficients $S*f_n$, avec n compris entre 1 et Q, représentent alors le signal $S_{in}$ filtré par les filtres FLT1 à FLTQ.

A ce stade, le rapport signal à bruit est amélioré, mais le traitement effectué a fortement déformé le signal d'origine. Il est alors nécessaire de reconstruire le signal à partir des signaux $S*f_n$ avec n compris entre 1 et Q.

Pour ce faire, en sortie de chaque filtre FLT1 à FLTQ, des moyens de multiplication $M_1$ à $M_Q$ permettent au signal obtenu d'être multiplié au vecteur $Y_n$, de longueur K, obtenu par le produit entre la matrice B de variance-covariance du bruit et le vecteur $f_n$ associé précédemment défini fournissant les coefficients du filtre en question :

$Y_n = Bf_n$, cette relation devant s'entendre comme le produit de la matrice B par le vecteur $f_n$, avec n compris entre 1 et Q.

Il est à noter qu'il y aura donc autant de vecteurs $Y_n$ que de filtres FLTQ.

Chacun des coefficients $S*f_n$ est donc multiplié au vecteur $Y_n$, avec n compris entre 1 et Q. Des moyens de sommation $P_1$ à $P_{Q-1}$ sont alors prévus pour sommer les vecteurs résultant de toutes ces opérations, de façon à obtenir en sortie un vecteur $S_{out}$ de longueur K, formellement :

$$Sout = \sum_{n=1}^{Q} S * f_n Y_n$$

Le signal $S_{out}$ est donc un signal remis en forme, présentant un rapport signal à bruit plus favorable que le signal en entrée du dispositif, les filtres FLT1 à FLTQ étant optimaux au sens du rapport signal à bruit. Il convient toutefois de noter que le rapport signal à bruit décroît lorsque Q augmente, alors que la précision sur l'horloge de synchronisation diminue avec Q. Le nombre Q sera donc choisi suivant un compromis entre gain en rapport signal à bruit, et donc résistance aux perturbations, et précision sur la synchronisation.

Un exemple de configuration du bloc de filtres reconstructeurs 70 selon l'invention est présenté ci-après. Dans cet exemple, le débit binaire est d=142,8 khz, le code d'étalement est le code barker 7. La fréquence maximum du signal utile est 1 MHz, la fréquence d'échantillonnage est fe=4 MHz, la taille des filtres est donc K=28. Le bruit considéré est celui du canal (bruit aditif à bande étroite centré autour de la fréquence porteuse de largeur de bande égale à celle du message étalé) après démodulation. Ce mélange de bruit a été traité avec la chaîne classique (figure 1), d'une part, et avec la chaîne incluant le bloc de filtres reconstructeurs basé sur la technique de filtrage adapté stochastique (figure 3), d'autre part. Le rapport signal à bruit dans le canal a été fixé à 0 dB.

Le calcul des coefficients des matrices A, et respectivement B, peut donc se faire à partir des valeurs prises par la fonction d'autocorrélation du signal utile, respectivement du bruit.

Les valeurs et vecteurs propres de la matrice $B^{-1}A$ ayant été calculés, un compromis acceptable entre précision de l'horloge de synchronisation et gain en rapport signal à bruit conduit à choisir les cinq vecteurs propres $f_1$ à $f_5$ correspondant aux cinq plus grandes valeurs propres de la matrice $B^{-1}A$, ce qui donne cinq filtres FLTQ (Q=5) dans le bloc de filtrage 70. Les 28 coefficients de chacun des filtres FLT1 à FLT5 sont alors donnés par les composantes de chacun des vecteurs propres $f_1$ à $f_5$. Les vecteurs $Y_1$ à $Y_5$ ont été calculés à partir des vecteurs propres $f_1$ à $f_5$. Les coefficients des vecteurs $f_1$ à $f_5$ ainsi que ceux des vecteurs $Y_1$ à $Y_5$ sont présentés dans le tableau ci-dessous :

| | $f_1$ | $f_2$ | $f_3$ | $f_4$ | $f_5$ | | | $Y_1$ | $Y_2$ | $Y_3$ | $Y_4$ | $Y_5$ |
|---|---|---|---|---|---|---|---|---|---|---|---|---|
| $a_1$ | -0,26 | -0,14 | -0,21 | -0,12 | 0,03 | | $a_1$ | -0,22 | -0,11 | -0,16 | -0,12 | 0,01 |
| $a_2$ | -0,27 | -0,14 | -0,27 | -0,17 | 0,06 | | $a_2$ | -0,29 | -0,16 | -0,27 | -0,19 | 0,05 |
| $a_3$ | -0,20 | -0,11 | -0,30 | -0,20 | 0,11 | | $a_3$ | -0,19 | -0,12 | -0,29 | -0,21 | 0,10 |
| $a_4$ | -0,04 | -0,03 | -0,28 | -0,21 | 0,15 | | $a_4$ | -0,01 | -0,03 | -0,25 | -0,21 | 0,15 |
| $a_5$ | 0,12 | 0,07 | -0,22 | -0,19 | 0,20 | | $a_5$ | 0,14 | 0,07 | -0,20 | -0,20 | 0,19 |
| $a_6$ | 0,23 | 0,18 | -0,14 | -0,16 | 0,23 | | $a_6$ | 0,23 | 0,18 | -0,14 | -0,16 | 0,24 |
| $a_7$ | 0,24 | 0,27 | -0,04 | -0,10 | 0,26 | | $a_7$ | 0,24 | 0,28 | -0,04 | -0,10 | 0,26 |
| $a_8$ | 0,16 | 0,32 | 0,05 | -0,03 | 0,28 | | $a_8$ | 0,16 | 0,33 | 0,05 | -0,03 | 0,28 |
| $a_9$ | 0,02 | 0,32 | 0,13 | 0,05 | 0,27 | | $a_9$ | 0,02 | 0,32 | 0,13 | 0,05 | 0,27 |
| $a_{10}$ | -0,12 | 0,26 | 0,18 | 0,13 | 0,25 | | $a_{10}$ | -0,12 | 0,26 | 0,18 | 0,13 | 0,25 |

(suite)

|  | $f_1$ | $f_2$ | $f_3$ | $f_4$ | $f_5$ |  |  | $Y_1$ | $Y_2$ | $Y_3$ | $Y_4$ | $Y_5$ |
|---|---|---|---|---|---|---|---|---|---|---|---|---|
| $a_{11}$ | -0,22 | 0,15 | 0,21 | 0,20 | 0,21 |  | $a_{11}$ | -0,22 | 0,16 | 0,21 | 0,20 | 0,21 |
| $a_{12}$ | -0,25 | 0,03 | 0,19 | 0,25 | 0,16 |  | $a_{12}$ | -0,24 | 0,03 | 0,19 | 0,25 | 0,16 |
| $a_{13}$ | -0,19 | -0,09 | 0,13 | 0,29 | 0,10 |  | $a_{13}$ | -0,19 | -0,09 | 0,13 | 0,29 | 0,10 |
| $a_{14}$ | -0,07 | -0,16 | 0,05 | 0,31 | 0,03 |  | $a_{14}$ | -0,07 | -0,15 | 0,04 | 0,31 | 0,03 |
| $a_{15}$ | 0,07 | -0,16 | -0,05 | 0,31 | -0,03 |  | $a_{15}$ | 0,07 | -0,15 | -0,04 | 0,31 | -0,03 |
| $a_{16}$ | 0,19 | -0,09 | -0,13 | 0,29 | -0,10 |  | $a_{16}$ | 0,19 | -0,09 | -0,13 | 0,29 | -0,10 |
| $a_{17}$ | 0,25 | 0,03 | -0,19 | 0,25 | -0,16 |  | $a_{17}$ | 0,24 | 0,03 | -0,19 | 0,25 | -0,16 |
| $a_{18}$ | 0,22 | 0,15 | -0,21 | 0,20 | -0,21 |  | $a_{18}$ | 0,22 | 0,16 | -0,21 | 0,20 | -0,21 |
| $a_{19}$ | 0,12 | 0,26 | -0,18 | 0,13 | -0,25 |  | $a_{19}$ | 0,12 | 0,26 | -0,18 | 0,13 | -0,25 |
| $a_{20}$ | -0,02 | 0,32 | -0,13 | 0,05 | -0,27 |  | $a_{20}$ | -0,02 | 0,32 | -0,13 | 0,05 | -0,27 |
| $a_{21}$ | -0,16 | 0,32 | -0,05 | -0,03 | -0,28 |  | $a_{21}$ | -0,16 | 0,33 | -0,05 | -0,03 | -0,28 |
| $a_{22}$ | -0,24 | 0,27 | 0,04 | -0,10 | -0,26 |  | $a_{22}$ | -0,24 | 0,28 | 0,04 | -0,10 | -0,26 |
| $a_{23}$ | -0,23 | 0,18 | 0,14 | -0,16 | -0,23 |  | $a_{23}$ | -0,23 | 0,18 | 0,14 | -0,16 | -0,24 |
| $a_{24}$ | -0,12 | 0,07 | 0,22 | -0,19 | -0,20 |  | $a_{24}$ | -0,14 | 0,07 | 0,20 | -0,20 | -0,19 |
| $a_{25}$ | 0,04 | -0,03 | 0,28 | -0,21 | -0,15 |  | $a_{25}$ | 0,01 | -0,03 | 0,25 | -0,21 | -0,15 |
| $a_{26}$ | 0,20 | -0,11 | 0,30 | -0,20 | -0,11 |  | $a_{26}$ | 0,19 | -0,12 | 0,29 | -0,21 | -0,10 |
| $a_{27}$ | 0,27 | -0,14 | 0,27 | -0,17 | -0,06 |  | $a_{27}$ | 0,29 | -0,16 | 0,27 | -0,19 | -0,05 |
| $a_{28}$ | 0,26 | -0,14 | 0,21 | -0,12 | -0,03 |  | $a_{28}$ | 0,22 | -0,11 | 0,16 | -0,12 | -0,01 |

Des mesures de rapport signal à bruit en sortie du filtre adapté ont été faites :

- 5,82 dB pour la chaîne de traitement classique, et
- 8,84 dB pour la chaîne selon l'invention intégrant les filtres reconstructeurs configurés avec les valeurs de l'exemple ci-dessus.

Avec une configuration du bloc de filtrage 70 selon les valeurs du tableau, on peut observer une amélioration significative du rapport signal à bruit. En effet, le gain en terme de rapport signal à bruit est de 3dB, ce qui correspond, dans le cas étudié, à une division par cent du taux d'erreur bit en sortie du processus de décodage.

**Revendications**

1. Dispositif de réception d'un signal modulé, adapté à un système de transmission utilisant une modulation binaire en phase de la porteuse par un message binaire sur lequel a été pratiqué un étalement de spectre à séquence directe, ce dispositif comprenant une première partie analogique radio-fréquence, transformant le signal reçu en un signal démodulé basse-fréquence, ledit signal démodulé étant appliqué à une deuxième partie numérique dudit dispositif comprenant un convertisseur analogique-numérique (50) et un filtre (60) adapté au code d'étalement utilisé pour supprimer l'étalement appliqué au message d'origine, ledit dispositif étant **caractérisé en ce qu'**il comprend un bloc de filtrage supplémentaire (70), disposé entre le convertisseur analogique-numérique (50) et le filtre adapté (60), ledit bloc de filtrage (70) mettant en oeuvre un filtrage adapté stochastique pour améliorer le rapport signal à bruit en entrée dudit filtre adapté.

2. Dispositif de réception selon la revendication 1, **caractérisé en ce que** le bloc de filtrage supplémentaire (70) comprend une pluralité Q de filtres numériques de base (FLT1 à FLTQ) à réponse impulsionnelle finie montés en parallèle, dont chacun reçoit le signal ($S_{in}$) échantillonné fourni en sortie du convertisseur analogique-numérique (50), chaque filtre (FLT1 à FLTQ) étant **caractérisé par** un ensemble de K coefficients, ce nombre K étant déterminé de manière à ce qu'il corresponde au nombre d'échantillons minimal pour décrire un bit du message étalé, les coefficients de chacun des Q filtres correspondant respectivement aux composantes des Q vecteurs propres ($f_1$ à $f_Q$) associés à au moins les Q valeurs propres supérieures à 1 de la matrice $B^{-1}A$, où B est la matrice de variance-covariance du bruit résultant après démodulation et A la matrice de variance-covariance du signal utile.

3. Dispositif de réception selon la revendication 2, **caractérisé en ce que** le bloc de filtrage supplémentaire (70) comprend, pour chaque filtre (FLT1 à FLTQ) de la pluralité Q de filtres à réponse impulsionnelle finie, des moyens ($M_1$ à $M_Q$) pour multiplier le signal ($S*f_1$ à $S*f_Q$) obtenu en sortie dudit filtre, avec respectivement le vecteur ($Y_1$ à $Y_Q$) résultant du produit entre la matrice B de variance-covariance du bruit et le vecteur propre ($f_1$ à $f_Q$) définissant les coefficients dudit filtre, ledit bloc comprenant en outre des moyens de sommation ($P_1$ à $P_{Q-1}$) des vecteurs résultant de toutes ces opérations, fournissant un signal ($S_{out}$) correspondant au signal en sortie du convertisseur analogique-numérique remis en forme et présentant un rapport signal à bruit amélioré.

4. Dispositif de réception selon l'une quelconque des revendications 1 à 3, **caractérisé en ce qu'**il comprend un premier (Comp1) et un second (Comp2) comparateurs à hystérésis installés en sortie du filtre (60) adapté au code d'étalement, propre à comparer l'amplitude du signal de sortie du filtre adapté (60) à une valeur de seuil inférieur et à une valeur de seuil supérieur, et à délivrer respectivement le message binaire d'origine et son horloge de synchronisation associée pour la capture des données dudit message.

5. Dispositif de réception selon la revendication 4, **caractérisé en ce que** le premier et le second comparateur présentent des valeurs de seuils supérieur et inférieur réglables.

6. Dispositif de réception selon l'une quelconque des revendications 1 à 5, **caractérisé en ce que** le filtre adapté au code d'étalement utilisé est un filtre numérique à réponse finie.

7. Dispositif de réception selon l'une quelconque des revendications 1 à 6, **caractérisé en ce que** le bruit correspond au bruit du canal de transmission.

**Claims**

1. Receiver device for a modulated signal, suited in particular to a transmission system using a binary carrier phase modulation by means of a binary message on which a direct sequence spread spectrum operation has been carried out, this device comprising a first analog radio frequency part, transforming the signal received into a low-frequency, demodulated signal, said demodulated signal being applied to a second digital part of said device comprising an analog-to-digital converter (50) and a filter (60) matched to the spreading code used in order to delete the spreading applied to the original message, said device being **characterized in that** it includes an additional filtering unit (70), arranged between the analog-to-digital converter (50) and the matched filter (60), said filtering unit (70) implementing a stochastic matched filtering operation in order to improve the signal-to-noise ratio at the input of said matched filter.

2. Receiver device as claimed in claim 1, **characterized in that** the additional filtering unit (70) includes a plurality Q of finite impulse response digital base filters (FLT1 to FLTQ) mounted in parallel, each of which receives the under-sampled sampled signal ($S_{in}$) supplied at the output of the analog-to-digital converter (50), each filter (FLT1 to FLTQ) being **characterized by** a set of K coefficients, this number K being determined such that it corresponds to the minimum number of samples for describing one bit of the spread message, the coefficients of each of the Q filters corresponding respectively to the components of the Q eigen vectors ($f_1$ to $f_Q$) associated with at least the Q eigenvalues greater than 1 of the matrix $B^{-1}A$, where B is the variance-covariance matrix of the resultant noise after demodulation and A the variance-covariance matrix of the wanted signal.

3. Receiver device as claimed in claim 2, **characterized in that** for each filter (FLT1 to FLTQ) of the plurality Q of finite impulse response filters, the additional filtering unit (70) includes means ($M_1$ to $M_Q$) for multiplying the signal ($S*f_1$ to $S*f_Q$) obtained at the output of said filter, with, respectively, the vector ($y_1$ to $y_Q$) resulting from the product between the variance-covariance matrix B of the noise and the eigen vector ($f_1$ to $f_Q$) defining the coefficients of said filter, said unit further comprising summing up means ($P_1$ to $P_{Q-1}$) for summing-up the vectors resulting from all of these operations, supplying a signal ($S_{out}$) corresponding to the output signal of the reformatted analog-to-digital converter and having an improved signal-to-noise ratio.

4. Receiver device as claimed in any of claims 1 to 3, **characterized in that** it includes first (Comp1) and second (Comp2) hysteresis comparators installed at the output of the filter (60) matched to the spreading code, capable of comparing the amplitude of the output signal of the matched filter (60) to a lower threshold value and upper threshold value, and of delivering, respectively, the original binary message and its associated synchronization clock for capturing the data of said message.

5. Receiver device as claimed in claim 4, **characterized in that** the first and second comparators have adjustable upper and lower threshold values.

6. Receiver device as claimed in any one of claims 1 to 5, **characterized in that** the filter matched to the spreading code used is a finite response digital filter.

7. Receiver device as claimed in any one of claims 1 to 6, **characterized in that** the noise corresponds to the transmission channel noise.

**Patentansprüche**

1. Vorrichtung zum Empfang eines modulierten Signals, welche für ein Übertragungssystem eingerichtet ist, das eine binäre Phasenmodulation der Trägerwelle durch eine binäre Nachricht einsetzt, an welcher eine Direktsequenzspektrumsspreizung durchgeführt wurde, wobei diese Vorrichtung einen ersten analogen Hochfrequenzbereich aufweist, welcher das empfangene Signal in ein demoduliertes Niederfrequenzsignal umwandelt, wobei das demodulierte Signal zu einem zweiten digitalen Bereich dieser Vorrichtung gesendet wird, welcher einen Analog-Digital-Umsetzer (50) und ein an den Spreizungscode angepasstes Filter (60) aufweist, der eingesetzt wird, um die auf die Ursprungsnachricht angewandte Spreizung zu unterdrücken, wobei die Vorrichtung **dadurch gekennzeichnet ist, dass** sie einen zusätzlichen Filterblock (70) aufweist, der zwischen dem Analog-Digital-Umsetzer (50) und dem angepassten Filter (60) angeordnet ist, wobei der Filterblock (70) ein angepasstes stochastische Filtern verwendet, um das Signal-Rausch-Verhältnis am Eingang des angepassten Filters zu verbessern.

2. Empfangsvorrichtung gemäß Anspruch 1, **dadurch gekennzeichnet, dass** der zusätzliche Filterblock (70) eine Vielzahl Q von parallel angeordneten digitalen Basisfiltern (FLT1 bis FLTQ) mit begrenzter Impulsantwort aufweist, von denen jeder das am Ausgang des Analog-Digital-Umsetzers (50) gelieferte abgetastete Signal ($S_{in}$) empfängt, wobei jeder Filter (FLT1 bis FLTQ) **gekennzeichnet ist durch** einen Satz von K Koeffizienten, wobei diese Zahl K derart bestimmt ist, dass sie der minimalen Abtastanzahl entspricht, um ein Bit der gespreizten Nachricht zu beschreiben, wobei die Koeffizienten jedes der Q Filter jeweils Komponenten von Q Eigenvektoren ($f_1$ bis $f_Q$) entsprechen, welche zumindest den Q Eigenwerten oberhalb von 1 der Matrix $B^{-1}A$ zugeordnet sind, wobei B die Varianz-Covarianz-Matrix des nach der Demodulation erhaltenen Rauschens ist und A die Varianz-Covarianz-Matrix des Nutzsignals ist.

3. Empfangsvorrichtung gemäß Anspruch 2, **dadurch gekennzeichnet, dass** der zusätzliche Filterblock (70) für jeden Filter (FLT1 bis FLTQ) der Vielzahl Q von Filtern mit begrenzter Impulsantwort Mittel (M1 bis MQ) zum Multiplizieren des am Ausgang des besagten Filters erhaltenen Signals ($S*f_1$ bis $S*f_Q$) mit jeweils dem Vektor ($Y_1$ bis $Y_Q$), der sich aus dem Produkt der Varaianz-Covarianz-Matrix B des Rauschens und dem die Koeffizienten des Filters definierenden Eigenvektor ($f_1$ bis $f_Q$) ergibt, wobei dieser Block außerdem Mittel zur Summierung ($P_1$ bis $P_{Q-1}$) von aus allen diesen Operationen erhaltenen Vektoren aufweist, welche ein Signal ($S_{out}$) liefern, das dem Signal am Ausgang des Analog-Digital-Umsetzers entspricht, welches wieder in Form gebracht ist und ein verbessertes Signal-Rausch-Verhältnis aufweist.

4. Empfangsvorrichtung gemäß einem der Ansprüche 1 bis 3, **dadurch gekennzeichnet, dass** sie einen ersten (Comp1) und einen zweiten (Comp2) Komparator mit Hysterese am Ausgang des an den Spreizungscode angepassten Filters (60) aufweist, und welche dazu geeignet sind, die Amplitude des Ausgangssignals des angepassten Filters (60) mit einem unteren Schwellenwert und einem oberen Schwellenwert zu vergleichen und jeweils die binäre Ursprungsnachricht und ihre zugehörige Taktsynchronisation zum Erfassen von Daten der Nachricht zu liefern.

5. Empfangsvorrichtung gemäß Anspruch 4, **dadurch gekennzeichnet, dass** der erste und der zweite Komparator einen einstellbaren oberen und unteren Schwellenwert aufweisen.

6. Empfangsvorrichtung gemäß einem der Ansprüche 1 bis 5, **dadurch gekennzeichnet, dass** das verwendete, an den Spreizungscode angepasste Filter ein digitales Filter mit begrenzter Antwort ist.

**7.** Empfangsvorrichtung gemäß einem der Ansprüche 1 bis 6, **dadurch gekennzeichnet, dass** das Rauschen dem Rauschen des Übertragungskanals entspricht.

*Fig. 1*

*Fig.3*

EP 1 720 307 B1

Fig.2

*Fig.4*

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5241561 A

- US 6134264 A